# EUROPÄISCHE PATENTSCHRIFT

(11) **EP 0 988 193 B1**
(45) Veröffentlichungstag und Bekanntmachung des Hinweises auf die Patenterteilung: **05.12.2007**
(21) Anmeldenummer: 99907266.3
(22) Anmeldetag: 22.01.1999
(51) Int. Cl.: B60S 1/08

(54) **SENSOREINRICHTUNG ZUR ERFASSUNG EINER BENETZUNG EINER SCHEIBE**
SENSOR DEVICE FOR DETECTING MOISTURE ON A WINDOW
DISPOSITIF DETECTEUR POUR DETECTER LA PRESENCE D'HUMIDITE SUR UNE VITRE

(30) Priorität: 08.04.1998 DE 19815748
(43) Veröffentlichungstag der Anmeldung: 29.03.2000
(73) Patentinhaber: ROBERT BOSCH GMBH, 70442 Stuttgart (DE)
(72) Erfinder: PIENTKA, Rainer, D-77871 Renchen (DE); BURKART, Manfred, D-76473 Iffezheim (DE)
(86) Internationale Anmeldenummer: PCT/DE1999/000149
(87) Internationale Veröffentlichungsnummer: WO 1999/052749

(56) Entgegenhaltungen:
- US-A- 5 498 866
- US-A- 5 661 303
- PATENT ABSTRACTS OF JAPAN vol. 098, no. 002, 30. Januar 1998 (1998-01-30) & JP 09 257952 A (YAZAKI CORP), 3. Oktober 1997 (1997-10-03)
- PATENT ABSTRACTS OF JAPAN vol. 098, no. 010, 31. August 1998 (1998-08-31) & JP 10 138878 A (YAZAKI CORP), 26. Mai 1998 (1998-05-26)

## Beschreibung

### Stand der Technik

Die Erfindung geht aus von einer Sensoreinrichtung zur Erfassung einer Benetzung einer Scheibe nach dem Oberbegriff des Hauptanspruchs.

Aus der DE 197 01 258 A1 ist eine Sensoreinrichtung zur Steuerung von Wisch-Wasch-Anlagen für Kraftfahrzeugscheiben bekannt geworden, die nach einem optoelektronischen Prinzip funktioniert. Die Sensoreinrichtung weist mehrere Sender und mindestens einen Empfänger auf, die über ein Koppelmittel eine definierte Strahlung in die Scheibe ein- und auskoppeln, deren Benetzung durch Feuchtigkeit oder Verschmutzung gemessen werden soll. Die Strahlung wird aufgrund des Einkopplungswinkels mindestens einmal in der Scheibe an der (trockenen) Scheibenoberfläche totalreflektiert und schließlich an einer vorbestimmten Stelle wieder auf einen Empfänger ausgekoppelt. Durch eine Benetzung der Scheibenoberfläche (Luft, Wasser, Eis, Schmutz, Nebel etc.) wird die Totalreflexion gestört, so daß benetzungsabhängige Strahlungsverluste durch Auskoppelung eines Teils der Strahlung aus dem ursprünglichen Strahlengang, beispielsweise durch Wassertropfen, entstehen.

Die durch den Empfänger detektierte abgeschwächte Strahlung wird als Sensorsignal an eine signalverarbeitende Anordnung ausgegeben und dort beispielsweise im Hinblick auf die Ansteuerung einer Scheibenwisch- oder Waschanlage für Kraftfahrzeuge ausgewertet. Eine Steuerung steuert in Abhängigkeit des ausgewerteten Sensorsignals den Wischermotor in einem Dauer- oder Intervallwischbetrieb an.

Die Sender sind gemäß der DE 197 01 258 A1 konzentrisch auf dem Koppelmittel um den Empfänger oder abschnittsweise konzentrisch angeordnet, wobei das Koppelmittel kreis- oder ringförmig ausgestaltet ist. Durch Sender, Empfänger und Koppelmittel wird somit eine kreisförmige Grundfläche aufgespannt. Aufgrund dessen ist der Sensor bzw. das Sensorgehäuse kreiszylinderförmig ausgestaltet.

Die sensitive Fläche des Sensors ist durch die Summe der Meßbereiche der Scheibe gegeben, die sich annähernd zwischen je einem Sender und dem zugehörigen, d.h. angestrahltem, Empfänger befindet. Dabei ist als Meßbereich der Bereich auf der benetzbaren Seite der Scheibe zu verstehen, in dem die Senderstrahlung unbenetzt totalreflektiert wird und daher die Senderstrahlung aufgrund einer Benetzung der Scheibe mehr oder weniger in dem Meßbereich auskoppelbar ist.

Nachteilig hierbei ist jedoch, daß für eine vorgegebene Anzahl von Meßbereichen bzw. sensitiver Fläche, die gleiche Anzahl Sender eingesetzt werden muß. Eine hohe Anzahl von Sendern bzw. Empfängern führt jedoch zu hohen Fertigungskosten.

Als weiterer Nachteil ist anzusehen, daß die hohe Anzahl von Sendern und die kreisförmige Anordnung der Sender zu einer relativ großen Ausdehnung des Sensors und seiner Auflagefläche auf der Scheibe führen und daher den Sensor augenfällig und störend für den Fahrer des Kraftfahrzeugs machen, wenn dieser, wie heute üblich, innerhalb des Wischbereichs auf der Windschutzscheibe angebracht ist.

Weiter ist aus der EP-A-1 053 558 eine Sensoreinrichtung mit den Merkmalen des Oberbegriffs des Anspruchs 1 bekannt. Gemäß Artikel 54(3) EPÜ handelt es sich hierbei um eine nachveröffentlichte Schrift, die daher nur bezüglich der Neuheit in den Staaten DE, ES, FR, GB, IT und SE zu berücksichtigen ist.

### Vorteile der Erfindung

Die Erfindung ist durch die technischen Merkmale der unabhängigen Ansprüche 1 bis 4 definiert. Weitere Merkmale der Erfindung sind in den abhängigen Ansprüchen angegeben.

Die erfindungsgemäße Sensoreinrichtung mit den kennzeichnenden Merkmalen des Hauptanspruchs hat den Vorteil, dass bereits mit lediglich einem Sender zwei Messstrecken des Sensors auf der benetzbaren Scheibenaußenseite zu realisieren sind, in dem ein die Senderstrahlung in die Scheibe einkoppelnder Lichtleitkörper mindestens eine Struktur aufweist, mit der die von dem Sender ausgestrahlte Senderstrahlung in zwei unterschiedliche Richtungen gesammelt bzw. parallelisiert wird.

Besonders vorteilhaft ist, dass der die Senderstrahlung aus der Scheibe auskoppelnde Lichtleitkörper erfindungsgemäß weiterhin mindestens eine Struktur aufweist, mit der die von dem Empfänger detektierte Senderstrahlung aus zwei unterschiedlichen Richtungen auf den Empfänger fokussiert wird. Somit kann bei einer Anordnung von zwei Sendern und zwei Empfängern mit jeweils zugeordneten Strukturen des Lichtleitkörpers eine Sensoreinrichtung mit vier Messstrecken bzw. sensitiven Bereichen realisiert werden, wobei der Lichtleitkörper darüber hinaus eine geringe Ausdehnung und die Sensoreinrichtung eine kleine Auflagefläche auf der Scheibe aufweist.

Vorteilhaft ist weiterhin, daß diese Strukturen optische Linsen oder optische Flächen zwischen dem Umgebungsmedium und dem Lichtleitkörper aufweist, in deren Brennpunkt sich Sender oder Empfänger befinden. Damit kann auf zusätzliche Linsen oder optische Elemente im Strahlengang verzichtet werden und somit der konstruktive Aufbau des Lichtleitkörpers vereinfacht und die Baugröße der Sensoreinrichtung deutlich verringert werden.

Zwecks Optimierung der Vorrichtung ist es gemäß Anspruch 1, vorteilhaft vorgesehen, den Öffnungswinkel der von dem Sender ausgestrahlten zwei parallelisierten Senderstrahlen auf etwa 100° bis 120° festzulegen. Damit können die beiden optischen Flächen der Strukturen ohne gegenseitige Überlappung angeordnet werden, so daß die Auflösung der Strahlenbündel hoch ist.

Besonders vorteilhaft ist weiterhin, zwei Sender und zwei Empfänger derart anzuordnen, daß deren Abbildungen in einer zur Scheibe parallelen Ebene die Eckpunkte eines Parallelogramms bilden, wobei der Öffnungswinkel, der aus den zwei unterschiedlichen Richtungen auf den Empfänger gebündelten Senderstrahlung gemäß Anspruch 2 etwa 60° bis 80° beträgt. Die auf den Empfänger fokussierende Struktur weist somit zwei sich überlappende optische Flächen auf, die jedoch für die Fokussierung der Strahlung auf den Empfänger keine Störung darstellen.

Desweiteren sind vorteilhafterweise die optischen Achsen der Strukturen des Lichtleitkörpers in einem Neigungswinkel von etwa 45° zur Scheibe gerichtet. Dadurch kann die Senderstrahlung im Lichtleitkörper ohne weitere Umlenkung in die Scheibe eingeleitet werden, so daß sie bei einer trockenen und sauberen Scheibenaußenseite an dieser totalreflektiert und in der Scheibe weitergeleitet wird.

Bei einer Anordnung des Senders an einer zur Scheibe parallelen Leiterplatte ermöglicht der Neigungswinkel von etwa 45° darüber hinaus eine optimale Lichtausbeute des Senders, da bei Verwendung einer Leuchtdiode bzw. eines Chips mit einer zur Scheibe parallelen, leuchtenden Fläche als Sender, dessen ausgesandte Strahlung in einem Raumwinkel dem Lambertschen-Kosinusgesetz unterliegt.

Durch die vorteilhafte Anordnung der zwei Sender und zwei Empfänger als Parallelogramm ist die Auflagefläche des Sensors auf der Scheibe vorzugsweise rechteckig oder ebenfalls parallelogrammförmig zu wählen. Ebenfalls denkbar ist eine ovale Auflagefläche des Sensors mit insbesondere einem gemäß Anspruch 3 ovalen Lichtleitkörper.

### Zeichnung

Ausführungsbeispiele der Erfindung sind in der Zeichnung dargestellt und in der nachfolgenden Beschreibung näher erläutert. Es zeigen
Figur 1 einen Schnitt einer Sensoreinrichtung durch einen Sender und zugeordneten Empfänger,
Figur 2 einen erfindungsgemäßen Lichtleitkörper mit Strukturen in perspektivischer Ansicht,
Figur 3 der Lichtleitkörper gemäüß Figur 2 in Aufsicht, Figur 4a einen Schnitt des Lichtleitkörpers entlang der Linie IVa-IVa gemäß Figur 3 durch einen Sender und einen Empfänger,
Figur 4b einen Schnitt des Lichtleitkörpers entlang der Linie IVb-IVb gemäß Figur 3 durch einen Sender und
Figur 5 ein weiteres Ausführungsbeispiel des Lichtleitkörpers.

### Beschreibung der Ausführungsbeispiele

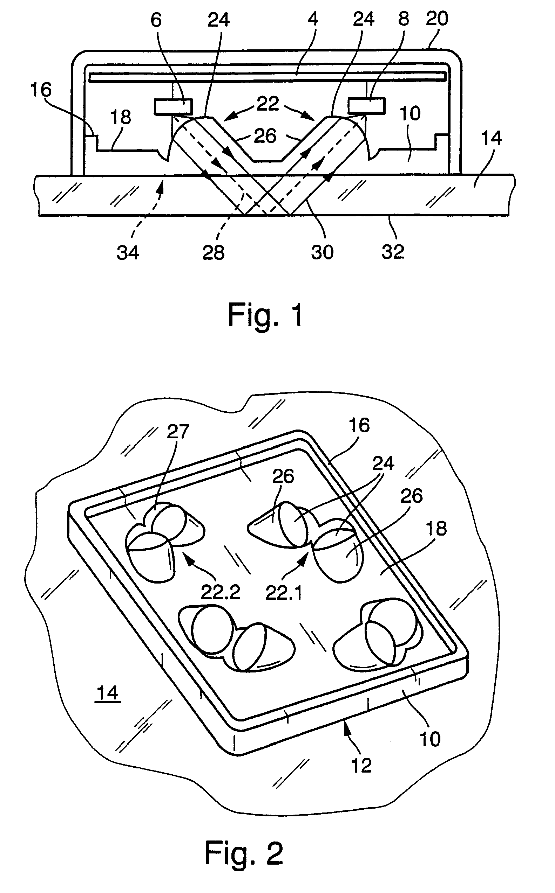

Gemäß Figur 1 ist eine an einer Kraftfahrzeugscheibe 14 angebrachte optoelektronische Sensoreinrichtung zur Erfassung einer Benetzung mit Feuchtigkeit oder Schmutz der Scheibe 14 im Schnitt dargestellt. Die Sensoreinrichtung weist ein Gehäuse 20 auf, das an der Scheibe 14, insbesondere durch Verkleben oder Anpressen, befestigt sind. Direkt mit der Scheibe 14 in Kontakt steht ebenfalls ein Lichtleitkörper 10 mit zwei Strukturen 22, die auf einer dem Sensorinneren zugewandten Oberseite 18 des Lichtleitkörpers 10 hervorstehen. Der Lichtleitkörper 10 ist beispielsweise über eine Klemmfeder von dem Gehäuse 20 an die Scheibe 14 angedrückt oder mit dieser verklebt. Die Strukturen 22 weisen linsenförmige optische Flächen 24 auf. Im Brennpunkt der optischen Flächen 24 befinden sich ein Sender 6 und ein Empfänger 8. Beide sind an einer Leiterplatte 4 parallel zu dieser befestigt, die ebenfalls parallel zur Scheibe 14 innerhalb des Sensorgehäuses 20 angeordnet ist.

Der Strahlengang der Senderstrahlung 30 ist entlang der optischen Achsen 28 der optischen Flächen 24 skizziert. Die Senderstrahlung 30 wird an der dem Sender 6 zugeordneten optischen Fläche 24 der Struktur 22 parallelgerichtet und in einem Lichtleiter 26 der Basis des Lichtleitkörpers 10 zugeführt. Der parallelgerichtete Strahlengang 30 wird zunächst mittels des Lichtleitkörpers 10 in die Scheibe 14 eingekoppelt, unterliegt an der sauberen und unbenetzten Außenseite 32 der Scheibe 14 mindestens einer Totalreflexion und wird aus der Scheibe 14 über den Lichtleitkörper 10 und der dem Empfänger 8 zugeordneten brechenden Fläche 24 der weiteren Struktur 22 ausgekoppelt und auf den Empfänger 8 fokussiert.

Figur 2 zeigt den Lichtleitkörper 10 in einer perspektivischen Ansicht mit einer rechteckigen zur Scheibe 14 gerichteten Auflagefläche 12 und der Oberseite 18 mit einem umlaufenden Steg 16. Dem Lichtleitkörper 10 sind die Strukturen 22.1 und 22.2 angeformt, die aus der Oberseite 18 des Lichtleitkörpers 10 hervorstehen und paarweise angeordnet sind. Die insgesamt vier Strukturen 22 weisen jeweils zwei linsenförmig gewölbte optische Flächen 24 und jeweils zwei zylinderartig ausgeformte Lichtleiter 26 auf, wobei die optischen Flächen 24 bis in die davor liegenden Mulden 27 des Lichtleitkörpers 10 reichen.

Sowohl der Lichtleitkörper 10 als auch die Strukturen 22 sind aus demselben Material beschaffen, das im wesentlichen transparent für die Senderstrahlung ist. Beispielsweise eignen sich hierzu Plexiglasmaterialien, die entsprechend der verwendeten Senderstrahlung 30 (Infrarot oder visuelles Licht) eingefärbt oder transparent belassen werden. Durch die Einfärbung des Lichtleitkörpers 10, z.B. in Schwarz, kann ein Teil des Störlichts bzw. Umgebungslichts 34, das unerwünscht durch die Scheibe 14 in den Lichtleitkörper 10 fällt, ausgefiltert werden.

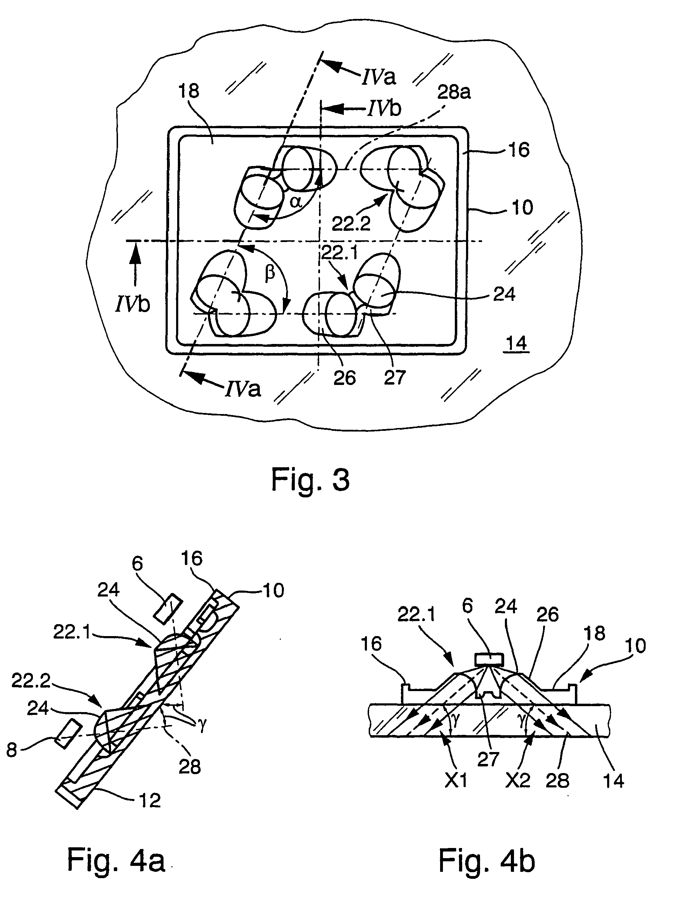

Der in Figur 2 perspektivisch dargestellte Lichtleitkörper 10 ist in Figur 3 in Aufsicht auf die Oberseite 18 skizziert. Die Strukturen 22 sind durch strichpunktierte Linien 28a verbunden, die der Projektion der optischen Achsen 28 der optischen Flächen 24 auf die zur Scheibe 14 parallelen Oberseite 18 entsprechen. Die strichpunktierten Linien 28a bilden ein Parallelogramm. In den Eckpunkten des Parallelogramms sind jeweils ein Sender 6 oder ein Empfänger 8 anzuordnen. Die Innenwinkel α und β des Parallelogramms entsprechen dem Öffnungswinkel α der von einem der beiden Sender 6 ausgesandten zwei Strahlenbündel entlang der optischen Achsen 28 bzw. Linien 28a bzw. dem Öffnungswinkel β der aus den zwei unterschiedlichen Richtungen auf einen der beiden Empfänger 8 gebündelten Senderstrahlung 30. Der Öffnungswinkel α des Senders 6 beträgt etwa 110°, der Öffnungswinkel β des Empfängers 8 beträgt etwa 70°.

Anhand Figur 3 ist ebenfalls erkennbar, daß sich die Strukturen 22.1 und 22.2 unterscheiden. Die dem Öffnungswinkel α der Sender 6 zugeordneten Strukturen 22.1 sind gekennzeichnet durch vollständige kreisförmige optische Flächen 24 und Lichtleiter 26. Die dem Öffnungswinkel β der Empfänger 8 zugeordneten Strukturen 22.2 weisen ineinander übergehende und miteinander verbundene optische Flächen 24 und Lichtleiter 26 auf.

Figur 4a zeigt einen Schnitt entlang der Linie IVa-IVa gemäß Figur 3 durch den Lichtleitkörper 10 und zwei Strukturen 22.1 und 22.2. Skizziert sind hier die optischen Achsen 28 der optischen Flächen 24 sowie ein Sender 6 und ein Empfänger 8. Der Neigungswinkel γ der optischen Achsen 28 zur Auflagefläche 12 bzw. zur Scheibenaußenseite 32 beträgt etwa 45° und erlaubt somit die Totalreflexion der einfallenden Senderstrahlung 30 an der Scheibenaußenseite 32.

Figur 4b zeigt einen Schnitt entlang der Linie IVb-IVb gemäß Figur 3 durch den Lichtleitkörper 10 und einer einem Sender 6 zugeordneten Struktur 22.1. Skizziert sind hier die optischen Achsen 28 der optischen Flächen 24 der Struktur 22.1 sowie der Sender 6. Die Parallelisierung der Senderstrahlung in zwei Richtungen X1, X2 im Schnitt senkrecht zur Scheibe 14 ist hier erkennbar.

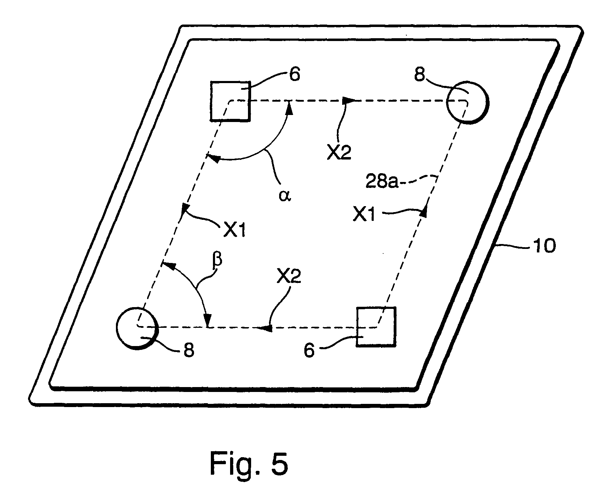

In Figur 5 ist ein weiteres Ausführungsbeispiel dargestellt. Hierbei ist die Anordnung der Sender 6 und Empfänger 8 in einem Parallelogramm skizziert dargestellt. Auf die Darstellung der Strukturen 22 wurde der Übersichtlichkeit halber verzichtet. Der Lichtleiter 10 ist nun ebenfalls als Parallelogramm ausgeformt. Dieser weist jedoch ansonsten die gleichen Eigenschaften und Merkmale wie der Lichtleitkörper 10 gemäß dem ersten Ausführungsbeispiel nach Figur 1 bis 4 auf. Ein den beiden Ausführungsformen gemeinsames Merkmal ist beispielsweise die Parallelisierung der Senderstrahlung eines Senders 6 in zwei Richtungen X1, X2 in Aufsicht parallel zur Scheibe 14 entlang der gestrichelten Linien 28a sowie die Fokussierung der Senderstrahlung aus zwei Richtungen X1, X2 auf einen Empfänger 8.

## Patentansprüche

1. Sensoreinrichtung zur Erfassung einer Benetzung einer Scheibe (14), insbesondere einer Kraftfahrzeugscheibe, mit mindestens einem lichtausstrahlenden Sender (6), einem Lichtleitkörper (10) der die Senderstrahlung (30) unter einen Neigungswinkel (γ) in die Scheibe (14) einkoppelt und die Senderstrahlung (30) auf mindestens einen Empfänger (8) aus der Scheibe (14) auskoppelt, wobei der Lichtleitkörper (10) mindestens eine Struktur (22.1) aufweist, mit der die von dem Sender (6) ausgestrahlte Senderstrahlung (30) in zwei unterschiedliche Richtungen (X1, X2) gesammelt und parallelisiert wird, wobei die Projektionen der zwei unterschiedlichen Richtungen (X1, X2) einen Öffnungswinkel (α) in Bezug auf die Oberfläche der Scheibe (14) bilden, **dadurch gekennzeichnet, dass** der Öffnungswinkel (α) einen Wert von etwa 100 bis 120 Grad hat.

2. Sensoreinrichtung nach dem Oberbegriff des Anspruchs 1, **dadurch gekennzeichnet, dass** der Lichtleitkörper (10) mindestens eine weitere Struktur (22.2) aufweist, mit der die von dem Empfänger (8) detektierte Senderstrahlung (30) aus zwei unterschiedlichen Richtungen (X1, X2) auf den Empfänger (8) fokussiert wird, wobei die Projektionen der aus den zwei unterschiedlichen Richtungen (X1, X2) auf den Empfänger (8) gebündelten Senderstrahlungen (30) in Bezug auf die Oberfläche der Scheibe (14) einen Öffnungswinkel (b) von etwa 60 bis 80 Grad haben.

3. Sensoreinrichtung nach dem Oberbegriff des Anspruchs 1, **dadurch gekennzeichnet, dass** die Auflagefläche (12) des Lichtleitkörpers (10) auf der Scheibe (14) ein Oval ist.

4. Sensoreinrichtung nach dem Oberbegriff des Anspruchs 1, **dadurch gekennzeichnet, dass** die Struktur (22) aus einer zur Scheibe (14) parallelen Oberfläche (18) des Lichtleitkörpers (10) hervorsteht und über einen zylinderförmigen Lichtleiter (26) mit der optisch aktiven Fläche (24) verbunden ist.

5. Sensoreinrichtung nach einem der vorhergehenden Ansprüche, **dadurch gekennzeichnet, dass** die Struktur (22) zum Sender (6) und/oder zum Empfänger (8) hin gerichtete optisch aktive Flächen (24) oder Linsen aufweist und der Sender (6) und/oder der Empfänger (8) im Brennpunkt der Flächen (24) oder Linsen angeordnet ist.

6. Sensoreinrichtung nach einem der vorhergehenden Ansprüche, **dadurch gekennzeichnet, dass** der Neigungswinkel (g) der optischen Achse (28) der Struktur (22) zur Scheibe (14) etwa 45 Grad beträgt.

7. Sensoreinrichtung nach einem der vorhergehenden Ansprüche, **dadurch gekennzeichnet, dass** jeweils zwei Sender (6) und zwei Empfänger (8) derart angeordnet sind, dass deren Abbildungen durch Projektion in eine Ebene parallel zu der Scheibe (14), insbesondere der Oberfläche (18) des Lichtleitkörpers (10), Eckpunkte eines Parallelogramms bilden.

8. Sensoreinrichtung nach einem der vorhergehenden Ansprüche, **dadurch gekennzeichnet, dass** die Auflagefläche (12) des Lichtleitkörpers (10) auf der Scheibe (14) rechteckig ist.

9. Sensoreinrichtung nach einem der vorhergehenden Ansprüche, **dadurch gekennzeichnet, dass** jedem Sender (6) und Empfänger (8) eine Struktur (22), insbesondere ein Linsenpaar, zugeordnet ist.

10. Sensoreinrichtung nach einem der vorhergehenden Ansprüche, **dadurch gekennzeichnet, dass** der Lichtleitkörper (10) mit den Strukturen (22) für die entsprechende Senderstrahlung (30) eingefärbt oder aus einem für die Senderstrahlung (30) transparenten Material ist und aufgrund seiner Einfärbung, vorzugsweise schwarz, oder seines Materials die Umgebungsstrahlung (34) ausfiltert.

## Claims

1. Sensor device for detecting contamination of a pane (14), in particular of a motor vehicle pane, with at least one light-emitting transmitter (6), a light-guiding body (10) which couples the transmitter radiation (30) at an inclination angle (γ) into the pane (14) and couples out the transmitter radiation (30) from the pane (14) onto at least one receiver (8), wherein the light-guiding body (10) has at least one structure (22.1) which is used to collect and parallelize in two different directions (X1, X2) the transmitter radiation (30) emitted by the transmitter (6), wherein the projections of the two different directions (X1, X2) form an opening angle (α) with respect to the surface of the pane (14), **characterized in that** the opening angle (α) has a value of approximately 100 to 120 degrees.

2. Sensor device according to the preamble of Claim 1, **characterized in that** the light-guiding body (10) has at least one further structure (22.2) which is used to focus the transmitter radiation (30) detected by the receiver (8) from two different directions (X1, X2) onto the receiver (8), wherein the projections of the transmitter radiation (30) focussed onto the receiver (8) from the two different directions (X1, X2) have an opening angle (β), with respect to the surface of the pane (14), of approximately 60 to 80 degrees.

3. Sensor device according to the preamble of Claim 1, **characterized in that** the bearing surface (12) of the light-guiding body (10) on the pane (14) is an oval.

4. Sensor device according to the preamble of Claim 1, **characterized in that** the structure (22) protrudes from a surface (18), which is parallel to the pane (14), of the light-guiding body (10) and is connected to the optically active surface (24) via a cylindrical light guide (26).

5. Sensor device according to one of the preceding claims, **characterized in that** the structure (22) has optically active surfaces (24) or lenses which are directed towards the transmitter (6) and/or towards the receiver (8), and the transmitter (6) and/or the receiver (8) is arranged at the focal point of the surfaces (24) or lenses.

6. Sensor device according to one of the preceding claims, **characterized in that** the inclination angle (γ) of the optical axis (28) of the structure (22) to the pane (14) is approximately 45 degrees.

7. Sensor device according to one of the preceding claims, **characterized in that** in each case two transmitters (6) and two receivers (8) are arranged such that their images by means of projection onto a plane parallel to the pane (14), in particular to the surface (18) of the light-guiding body (10), form corner points of a parallelogram.

8. Sensor device according to one of the preceding claims, **characterized in that** the bearing surface (12) of the light-guiding body (10) on the pane (14) is rectangular.

9. Sensor device according to one of the preceding claims, **characterized in that** a structure (22), in particular a pair of lenses, is assigned to each transmitter (6) and receiver (8).

10. Sensor device according to one of the preceding claims, **characterized in that** the light-guiding body (10) with the structures (22) for the corresponding transmitter radiation (30) is coloured or is composed of a material which is transparent to the transmitter radiation (30) and filters out the ambient radiation (34) on account of its colouring, preferably black, or on account of its material.

## Revendications

1. Installation de détecteur pour détecter le mouillage d'une vitre 14, notamment d'une vitre de véhicule automobile, comprenant au moins un émetteur 6 émettant de la lumière, un organe guide de lumière 10 qui injecte le rayonnement 30 de l'émetteur sous un angle d'inclinaison γ dans la vitre 14 et découple le rayonnement d'émetteur 30 de la vitre 14 vers au moins un récepteur 8,
l'organe guide de lumière 10 ayant au moins une structure 22.1 collectant et rendant parallèle le rayonnement 30 émis par l'émetteur 6 dans deux directions différentes X1, X2,
les projections des deux directions différentes X1, X2 formant un angle d'ouverture α par rapport à la surface de la vitre 14,
**caractérisée en ce que**
l'angle d'ouverture α est compris entre environ 100 et 120°.

2. Installation de détecteur selon le préambule de la revendication 1,
**caractérisée en ce que**
l'organe guide de lumière 10 présente au moins une autre structure 22.2 à l'aide de laquelle le rayonnement d'émetteur 30 détecté par le récepteur 8 à partir de deux directions différentes X1, X2 est focalisé sur le récepteur 8,
les projections des faisceaux d'émetteurs 30 regroupés sur le récepteur 8 venant des deux directions différentes X1, X2 par rapport à la surface de la vitre 14 ont un angle d'ouverture (b) de l'ordre de 60 à 80°.

3. Installation de détecteur selon le préambule de la revendication 1,
**caractérisée en ce que**
la surface d'appui 12 de l'organe guide de lumière 10 sur la vitre 14 est un ovale.

4. Installation selon le préambule de la revendication 1,
**caractérisée en ce que**
la structure 22 dépasse d'une surface 18 de l'organe guide de lumière 10 parallèle à la vitre 14 et est reliée à la surface optique active 24 par un guide de lumière de forme cylindrique 26.

5. Installation selon l'une des revendications précédentes,
**caractérisée en ce que**
la structure 22 comporte des surfaces optiques actives 24 ou lentilles dirigées vers l'émetteur 6 et/ou vers le récepteur 8 et l'émetteur 6 et/ou le récepteur 8 qui se trouvent au foyer des surfaces 24 ou des lentilles.

6. Installation selon l'une des revendications précédentes,
**caractérisée en ce que**
l'angle d'inclinaison (g) de l'axe optique 28 de la structure 22 par rapport à la vitre 14 est d'environ 45°.

7. Installation selon l'une des revendications précédentes,
**caractérisée en ce que**
chaque fois deux émetteurs 6 et deux récepteurs 8 sont installés pour que leurs images par projection dans un plan parallèle à la vitre 14 notamment à la surface supérieure 18 de l'organe de guidage de lumière 10 constituent les sommets d'un parallélogramme.

8. Installation selon l'une quelconque des revendications précédentes,
**caractérisée en ce que**
les surfaces d'appui 12 de l'organe guide de lumière 10 sur la vitre 14 sont rectangulaires.

9. Installation selon l'une des revendications précédentes,
**caractérisée en ce qu'**
à chaque émetteur 6 et récepteur 8 est associée une structure 22, notamment une paire de lentilles.

10. Installation selon l'une quelconque des revendications précédentes,
**caractérisée en ce que**
l'organe guide de lumière 10 avec des structures 22 est teinté pour un rayonnement d'émetteur 30 correspondant ou est réalisé en une matière transparente pour le rayonnement d'émetteur 30 et du fait de sa teinte, de préférence noire ou de sa matière, il élimine par filtrage, le rayonnement ambiant 34.
